# EUROPÄISCHE PATENTSCHRIFT

(11) **EP 2 857 339 B1**
(45) Veröffentlichungstag und Bekanntmachung des Hinweises auf die Patenterteilung: **24.05.2017**
(21) Anmeldenummer: 14181506.8
(22) Anmeldetag: 20.08.2014
(51) Int. Cl.: B65H 75/44, H02G 11/02, B65H 51/20

(54) **Kabelspeichervorrichtung**
Cable storage device
Dispositif pour stocker un câble

(30) Priorität: 01.10.2013 DE 202013104456 U
(43) Veröffentlichungstag der Anmeldung: 08.04.2015
(73) Patentinhaber: Kummert, Bernhard, 97447 Gerolzhofen (DE)
(72) Erfinder: Kummert, Bernhard, 97447 Gerolzhofen (DE)
(74) Vertreter: advotec.

(56) Entgegenhaltungen:
- DE-A1- 2 600 564
- DE-C- 697 075
- FR-A1- 2 712 563
- GB-A- 2 230 612
- US-A1- 2012 267 466

## Beschreibung

Die Erfindung betrifft eine Kabelspeichervorrichtung zur Aufnahme und Abgabe eines Kabels von einer von einem Trommelantrieb antreibbaren Speichertrommel gesteuert von einer Steuerungs- oder Regelungsvorrichtung gemäß dem Oberbegriff des Anspruchs 1.

Kabelspeichervorrichtungen sind in vielfältiger Art aus dem Stand der Technik bekannt, wobei in aller Regel zur Aufnahme und Abgabe des Kabels eine Speichertrommel eingesetzt wird, auf der das Kabel aufgewickelt werden kann. Weiterhin ist die Verwendung eines Trommelantriebs zum Antrieb der Speichertrommel bekannt, wobei dieser von einer Steuerungsvorrichtung angesteuert wird. Zur Führung des Kabels beim Einlauf in die Kabelspeichervorrichtungen weisen diese üblicherweise eine Kabelführung auf, so dass ein einwandfreies Auf- und Abwickeln auf die Speichertrommel unabhängig vom jeweiligen Verlauf des Kabels vor der Kabelspeichervorrichtung gewährleistet wird.

Ein bekanntes Problem bei motorgetriebenen Kabelspeichervorrichtungen besteht nun darin, dass bei übermäßigem Abrollen von der Speichertrommel bei unzureichendem Zug am Kabel eine Auflockerung der auf der Speichertrommel gewickelten Kabelwindungen erfolgt. Dies führt in bekannter Weise zu dem Problem, dass ein erneutes einwandfreies kompaktes Aufwickeln des Kabels auf die Speichertrommel erheblich erschwert, wenn nicht unmöglich, wird.

Derartige Probleme sind insbesondere beim Einsatz einer Kabelspeichervorrichtung für Inspektionskameras, wie sie beispielsweise in der GB 2 230 612 A beschrieben sind, bekannt

Bei diesen Systemen ist am von der Kabelspeichervorrichtung fernen Ende des Kabels eine Inspektionskamera angebracht, welche zur Inspektion von Rohren oder dergleichen in selbige eingeschoben wird. Ebenso sind Systeme bekannt, bei denen die Inspektionskamera an einem Fahrwagen angeordnet ist, der selbsttätig in das zu untersuchende Rohr einfahren kann. Ein Antrieb der Speichertrommel ist erforderlich, damit ohne unzulässige Zugkräfte am Kabelende ein ungehindertes Nachführen des Kabels ermöglich ist. Weiterhin ermöglicht der vorhandene Antrieb ein leichtes Aufrollen des Kabels bei Rückführung der Inspektionskamera.

Zur Lösung des bekannten Problems - der überschießenden Abwicklung von der Speichertrommel - wird in einer bekannten Ausführung aus dem Stand der Technik eine Pufferstrecke eingesetzt, innerhalb derer das Kabel frei durchhängt. Das Maß des Durchhängens ist hierbei unmittelbar von der Spannung im Kabel abhängig. Durch eine Infrarotlichtschranke wird ab einem Grenzwert ein unzulässig starkes Durchhängen erfasst, in Folge dessen beim Abrollen unmittelbar ein Stillstand des Speicherantriebs erfolgt. Bei weiterem Zug am Kabel wird das Kabel wiederum gestrafft, so dass der Speicherantrieb durch die Infrarotlichtschranke ausgelöst wieder in Betrieb gesetzt wird.

Besonders nachteilig bei dieser Ausführungsform ist es zum einen, dass für den Kabelpuffer eine erhebliche Baulänge erforderlich ist, damit durch den Kabelpuffer wirksam Schwankungen in der Zugbewegung am Kabel ausgeglichen werden können. Weiterhin hat es sich als nachteilig erwiesen, dass die Speichertrommel in Abhängigkeit von der Lichtschranke lediglich ein- oder ausgeschaltet wird. Hierdurch werden bei einem Ziehen am Kabel bis zum Ausgleich durch den Einsatz des Antriebs zunächst höhere Zugkräfte erzeugt und bei einem Stopp der Inspektionskamera wird unvermeidbar eine unnötige Kabellänge überschießend von der Speichertrommel abgewickelt.

Aus der DE 26 00 564 A1 ist eine Kabelspeichervorrichtung offenbart, wie sie an einem Kran oder Bagger zum Einsatz kommen kann. Die Kabelspeichervorrichtung umfasst dabei eine Kabeltrommel, die motorisch angetrieben werden kann, wobei zur Ermittlung einer Zugspannung im Kabel eine federelastisch gelagerte Pendelwippe eingesetzt wird. Die Winkelstellung der Pendelwippe wird mittels eines Potentiometers erfasst. Der Messwert aus der Pendelwippe wird eingesetzt zur Regelung des Antriebs der Speichertrommel.

Aufgabe der vorliegenden Erfindung ist es daher, die Kabelspeichervorrichtung von Inspektionskameras dahingehend zu verbessern, dass ein problemloses Auf- und Abwickeln des Kabels von der Speichertrommel gewährleistet wird und hierbei eine kompakte Bauform der motorgetriebenen Speichertrommel realisiert wird.

Die gestellte Aufgabe wird durch eine erfindungsgemäße Ausführungsform nach der Lehre des Anspruchs 1 gelöst.

Vorteilhafte Ausführungsformen sind Gegenstand der Unteransprüche.

Die gattungsgemäße Kabelspeichervorrichtung dient zur Aufnahme und Abgabe eines Kabels, das in der Art eines Datenkabels ausgebildet ist. Entsprechend der vorgesehenen Anordnung einer Inspektionskamera am fernen Ende des Kabels ist die Kabelspeichervorrichtung dahingehend ausgerüstet, dass über das Kabel Signale von und zu der Inspektionskamera übertragbar sind. Die hierzu notwendigen Maßnahmen zur Datenübertragung zu einer Speichertrommel und von der Speichertrommel in das Kabel sind dem Fachmann hinlänglich bekannt und können anhand bekannter Ausführungsformen gewählt werden.

Zumindest weist die Kabelspeichervorrichtung eine drehbar gelagerte Speichertrommel auf, wobei auf der Speichertrommel das Kabel aufgewickelt werden kann. Wenngleich das Kabel zur gattungsgemäßen Kabelspeichervorrichtung hinzugefügt werden kann, wird im Regelfall die Kabelspeichervorrichtung bereits das entsprechende Kabel aufweisen, da somit die fehlerfreie Datenverbindung in das Kabel gewährleistet werden kann. Die Speichertrommel ihrerseits kann mithilfe eines Trommelantriebs in Aufroll- und Abrollrichtung angetrieben werden. Hierzu weist die Kabelspeichervorrichtung weiterhin eine Steuerungs- oder Regelungsvorrichtung zur Steuerung des Trommelantriebs auf. Um welche Art von Steuerungs- oder Regelungsvorrichtung es sich hierbei handelt, ist zunächst unerheblich, wobei in einfachster Ausführung dies ein manueller Ein- und Ausschalter sein kann.

Weiterhin weist die gattungsgemäße Kabelspeichervorrichtung eine Kabelführung auf, mittels der das Kabel im Einlauf in die Kabelspeichervorrichtung geführt wird. Wesentlich für die Erfindung ist die Anordnung eines Kabelpuffers zwischen Kabelführung und Speichertrommel, welcher eine veränderliche gepufferte Kabellänge aufnehmen kann. Wie groß der Kabelpuffer hierbei ist, ist hingegen zunächst unerheblich. Insofern ist es denkbar, dass der Kabelpuffer eine lediglich relativ kleine Kabellänge zwischen puffern kann. Allerdings ist es ebenso möglich, dass der Kabelpuffer zum Beispiel eine gesamte Windung der Speichertrommel puffern kann. In aller Regel kann hierbei die gepufferte Kabellänge nicht zu Null reduziert werden, sondern vielmehr wird eine gewisse Mindestlänge in der Durchleitung durch den Kabelpuffer vorhanden sein.

Erfindungsgemäß ist nunmehr vorgesehen, dass eine mit der Regelungsvorrichtung verbundene Messvorrichtung den Füllzustand des Kabelpuffers bestimmen kann. Wesentlich ist hierbei, dass die Regelungsvorrichtung selbsttätig den Trommelantrieb in Abhängigkeit vom Füllzustand sowohl in Abrollrichtung als auch in Aufrollrichtung steuern kann, ohne dass es hierzu eines Eingriffs des Bedieners bedarf.

Während hingegen im bekannten Ausführungsbeispiel die Drehrichtung vom Verwender vorgewählt wird und allenfalls eine Start-Stopp-Automatik vorhanden ist, wird durch die erfindungsgemäße Ausführungsform ein wesentlich verbesserter Ausgleich der Drehbewegung der Speichertrommel in Abhängigkeit von der Bewegung am Kabel erreicht. Dies ermöglicht eine Verwendungsweise, bei der ohne Benutzereingriff wechselnd durch Ziehen am Kabel ein Abrollen von der Speichertrommel und bei Rückführung des Kabels ein automatisches Aufwickeln des Kabels auf die Speichertrommel erfolgt.

Erfindungsgemäß kann die Endgeschwindigkeit des von der Speichertrommel fernen Endes des Kabels ermittelt werden. Hierzu dient eine Inspektionskamera mit Geschwindigkeitsmesser, mit dem die Endgeschwindigkeit ermittelt werden kann. Die Übermittlung der Endgeschwindigkeit kann hierbei in einfacher Weise durch das Datenkabel erfolgen. Die Berücksichtigung der Endgeschwindigkeit in der Regelungsvorrichtung ist erfindungsgemäß vorteilhaft, weil hierdurch eine zeitliche Verzögerung bei einer entsprechenden Bewegung am fernen Ende des Kabels aufgrund möglicher großer Entfernungen zwischen der Kabelspeichervorrichtung und dem fernen Ende des Kabels unmittelbar in der Regelungsvorrichtung berücksichtigt werden kann, so dass eine entsprechende Einflussnahme auf die Steuerung des Trommelantriebs möglich wird.

Besonders vorteilhaft ist es hierbei, wenn das Abwickeln und das Aufwickeln auf der Speichertrommel dynamisch erfolgt und nicht lediglich ein Ein- und Ausschalten in den beiden Drehrichtungen möglich ist. Hierzu ist es vorteilhaft, wenn der von der Messvorrichtung an die Regelungsvorrichtung übermittelte Füllzustand des Kabelpuffers zwischen einem Minimum und einem Maximum mehrere vorbestimmte Werte annehmen kann. Somit kann in Abhängigkeit vom aktuell ermittelten Wert für den Füllzustand die Speichertrommel von der Regelungsvorrichtung mit unterschiedlichen Geschwindigkeiten in die jeweils erforderliche Drehrichtung betrieben werden.

Besonders vorteilhaft ist es hierbei, wenn der Füllzustand einen beliebigen Wert annehmen kann, und somit die Regelungsvorrichtung ohne Stufensprung in Abhängigkeit des Füllzustands die Bewegung des Trommelantriebs ansteuern kann. Hierdurch wird es erstmalig ermöglicht, die Auf- bzw. Abwicklung des Kabels auf die Speichertrommel annähernd synchron mit der Bewegung des Kabels vor der Kabelspeichervorrichtung durchzuführen.

Hierbei ist es besonders vorteilhaft, wenn in der Regelvorrichtung ein fester oder einstellbarer Mittelwert mit einer Regeltoleranz für den Füllzustand hinterlegt ist. Hierbei definiert der Mittelwert des Füllzustands denjenigen Zustand, bei dem die Speichertrommel weder beschleunigt noch abgebremst werden muss, sondern der aktuelle Bewegungszustand unverändert eingehalten werden kann. Hierbei wird bei gleichmäßiger Bewegung am Kabel eine gleichmäßige Drehbewegung der Speichertrommel realisiert. Im einfachsten Fall handelt es sich hierbei um den Stillstand.

Wenn in dieser Ausführung der Füllzustand den Mittelwert mit der vorgegebenen Regeltoleranz überschreitet, welches naheliegend mit einer Vergrößerung der gepufferten Kabellänge verbunden ist, ermöglicht die vorteilhafte Regelungsvorrichtung eine Abbremsung der sich in Abrollrichtung bewegenden Speichertrommel bzw. eine Beschleunigung der sich in Aufrollrichtung bewegenden Speichertrommel. Dieser vorteilhafte Regelungsvorgang führt in naheliegender Weise unmittelbar wiederum zu einer Verringerung der gepufferten Kabellänge und somit zu einer Annäherung an den vorgegebenen Mittelwert.

Wird hingegen der Mittelwert mit der Regeltoleranz unterschritten, bewirkt die vorteilhafte Regelvorrichtung eine Beschleunigung der sich in Abrollrichtung bewegenden Speichertrommel bzw. eine Abbremsbewegung der sich in Aufrollbewegung bewegenden Speichertrommel. Ebenso, wie beim Überschreiten des Mittelwerts, wird beim Unterschreiten des Mittelwerts durch den Eingriff der Regelvorrichtung ein Ausgleich der gepufferten Kabellänge und Annäherung an den Mittelwert erreicht.

Durch die vorteilhafte Ausführungsform wird eine besonders vorteilhafte Betriebsweise dahingehend ermöglicht, dass automatisch ohne manuellen Regelungseingriff ein dynamisches Abwickeln und Aufwickeln möglich ist. Wenn bei Stillstand der Speichertrommel am Kabel gezogen wird, so verkleinert sich der Füllzustand des Kabelpuffers, in Folge dessen von der Regelungsvorrichtung eine Beschleunigung der Speichertrommel in Abrollrichtung bewirkt wird. Erreicht die Abwickelgeschwindigkeit des Kabels von der Speichertrommel die Geschwindigkeit des Kabels vor der Kabelspeichervorrichtung, nähert sich aufgrund nachlassender Zugkräfte im Bereich des Kabelpuffers der Füllzustand dem Mittelwert an oder überschreitet diesen ggf. zunächst geringfügig. Mit Annäherung an den Mittelwert wird die Beschleunigung der Speichertrommel von der Regelungsvorrichtung beendet, so dass eine konstante, übereinstimmende Bewegung im Kabel vorliegt. Wird nunmehr das Kabel vor der Kabelspeichervorrichtung zum Stillstand gebracht oder vielmehr zurück zur Kabelspeichervorrichtung geführt, setzt unmittelbar eine Vergrößerung des Füllzustands des Kabelpuffes ein, woraufhin eine Abbremsung der sich in Abrollrichtung bewegenden Speichertrommel ggf. bis zum Stillstand erfolgt, wobei bei einem Rückführen des Kabel darüber hinausgehend eine Richtungsumkehr bei der Speichertrommel mit Beschleunigung in Aufrollrichtung erfolgt.

Die Regeltoleranz kann hierbei fest eingestellt sein, selbstregelnd unter Verhinderung eines übermäßigen Überschwingens von der Regelvorrichtung ermittelt sein oder durch den Verwender vorgegeben werden. Zumindest bedarf es einer Regeltoleranz, um einen Stillstand bei einem Mittelwert bzw. eine konstante Bewegungsform der Speichertrommel bei einem vorhandenen Mittelwert zu ermöglichen, ohne dass es zu einer laufenden Beschleunigung oder Abbremsung bei kleinsten Schwankungen kommt.

In besonders vorteilhafter Ausführungsform ist der Mittelwert einstellbar, so dass unterschiedliche Zugkräfte am Kabel bei gewünschtem Stillstand bzw. gewünschter kontinuierlicher Bewegungsform der Speichertrommel ermöglicht werden. Diesbezüglich ist beispielsweise in der Verwendung einer Inspektionskamera auf die Inspektion von Bohrschächten zu verweisen, welche eine unterschiedliche Tiefe aufweisen können. In Abhängigkeit von der zu inspizierenden Tiefe ändert sich das nach der Kabelführung herabhängende Kabel nebst Inspektionskamera und somit das im Bereich der Kabelführung am Kabel ziehende Gewicht. Sofern bei unterschiedlichen Zugkräften von der Speichertrommel ein Stillstand gewünscht wird, kann in einfacher Weise bedarfsweise durch Anpassung des Mittelwerts die Zugkraft ohne Beschleunigung oder Abbremsung der Speichertrommel eingestellt werden.

Hierbei ist es besonders vorteilhaft, wenn die Beschleunigung abhängig ist von der Differenz zwischen dem Füllzustand und dem Mittelwert. Bei beispielsweise größer werdender Differenz zwischen dem Füllzustand und dem Mittelwert, d.h. bei einer Annäherung an das Minimum bzw. Maximum der gepufferten Kabellänge, wird die Beschleunigung der Speichertrommel bis zur maximal vorgesehenen Drehgeschwindigkeit der Speichertrommel gesteigert. Zur Verhinderung eines Überschwingens kann hierbei innerhalb der Regelvorrichtung vorteilhaft eine Verzögerung vorgesehen sein. Durch diese besondere Ausführungsform wird ein hoch dynamisches Auf- und Abrollen des Kabels von der Speichertrommel ohne manuellen Eingriff zur Bedienung der Regelungsvorrichtung ermöglicht. Hierbei genügt lediglich ein Zug bzw. ein nachlassender Zug am Kabel, so dass ein Abwickeln oder Aufwickeln auf der Speichertrommel bewirkt wird.

In vorteilhafter Weise wird eine weitere Einflussnahme auf die Regelung des Trommelantriebs durch die Regelungsvorrichtung dadurch erreicht, dass eine Kabelgeschwindigkeit des Kabels im Bereich der Kabelführung erfasst wird. Durch die Bestimmung der Kabelgeschwindigkeit im Bereich der Kabelführung unter Berücksichtigung der durch die Drehbewegung der Speichertrommel abgewickelten bzw. aufgewickelten Kabellänge kann somit ein Abgleich mit der aufgrund des Füllzustands vorgenommenen Regelung erfolgen. Insbesondere wird hierdurch eine Plausibilitätskontrolle zwischen Füllzustand und Kabelgeschwindigkeit ermöglicht, womit auf mögliche Probleme im Kabelpuffer bzw. beim Aufwickeln oder Abwickeln des Kabels auf der Speichertrommel geschlossen werden kann.

Beispielsweise ist es somit möglich, einer ansonsten vorgesehenen Abbremsbewegung der Speichertrommel bei einem Überschreiten des Mittelwerts, d.h. einer Vergrößerung der gepufferten Kabellänge, aufgrund einer gleichzeitig erfassten Beschleunigung am fernen Ende des Kabels gegenzusteuern, so dass ggf. auf ein Abbremsen verzichtet wird. Unterschiede zwischen der Endgeschwindigkeit und der Kabelgeschwindigkeit im Bereich der Kabelführung bzw. dem Füllzustand des Kabelpuffers können insbesondere in den Fällen auftreten, wenn zwischen Kabelspeichervorrichtung und fernem Ende des Kabels eine große Strecke liegt.

Zur Realisierung des Kabelpuffers stehen verschiedene Möglichkeiten zur Verfügung, wobei in einer ersten grundsätzlichen Ausführungsform der Kabelpuffer durch eine ermöglichte Relativbewegung zwischen Kabelführung und Speichertrommel nebst Trommelantrieb geschaffen wird. Hierzu ist der Trommelantrieb mit der Speichertrommel verschiebbar oder schwenkbar gelagert, wobei die Messvorrichtung den Füllzustand des Kabelpuffers durch die Messung der Position des Trommelantriebs nebst Speichertrommel ermitteln kann.

Im Fall der verschiebbaren Ausführungsform des Trommelantriebs wird der Kabelpuffer dadurch realisiert, dass zwischen Speichertrommel und Kabelführung ein veränderlicher Abstand vorhanden ist, wobei sich der Kabelpuffer bei Verkürzung des Abstands entsprechend entleert und bei Vergrößerung des Abstands füllt.

Im Fall eines schwenkbar gelagerten Trommelantriebs wird der Kabelpuffer durch einen Anteil an der Aufwicklung auf der Speichertrommel realisiert. Das heißt, dass bei einem beispielhaften Stillstand des Trommelantriebs eine Vergrößerung des Füllzustands durch eine Schwenkbewegung des Speicherantriebs mit einer Aufwicklung des Kabels auf die Speichertrommel und analog eine Verkleinerung des Füllzustands durch eine Schwenkbewegung des Speicherantriebs mit einer Abwicklung von der Speichertrommel realisiert wird. Folglich wird entsprechender Kabelpuffer von der möglichen Schwenkbewegung des Trommelantriebs bestimmt. Diese Ausführungsform führt zu einer sehr kompakten Bauweise der Kabelspeichervorrichtung.

Wenngleich mit den zuvor genannten Ausführungsformen des Kabelpuffers ein Ausgleich der Bewegung zwischen dem Kabel vor der Kabelspeichervorrichtung und der durch den Trommelantrieb erzeugten Drehbewegung der Speichertrommel möglich wird, so weist diese Ausführungsform jedoch den Nachteil der großen dynamisch bewegten Massen von Speichertrommel nebst Trommelantrieb auf.

Daher ist es besonders vorteilhaft, wenn der Kabelpuffer durch eine Veränderung des Verlaufs des Kabels zwischen Kabelführung und Speichertrommel realisiert wird. Hierzu wird zumindest ein verstellbares Umlenkmittel eingesetzt, welches innerhalb des Kabelpuffers angeordnet ist. Eine Verstellung des Umlenkmittels hat unmittelbaren Einfluss auf den Füllzustand des Kabelpuffers, so dass zur Bestimmung des Füllzustands von der Messvorrichtung die Position des Umlenkmittels ermittelt wird.

Zur Reduzierung der Reibung zwischen Kabel und Umlenkmittel ist es weiterhin besonders vorteilhaft, wenn eine Umlenkrolle als Umlenkmittel eingesetzt wird.

Unabhängig davon, ob der Kabelpuffer durch ein Umlenkmittel unter Veränderung des Verlaufs des gepufferten Kabels zwischen Kabelführung und Speichertrommel oder eine Verlagerung des Trommelantriebs nebst Speichertrommel vorgenommen wird, ist es vorteilhaft, wenn eine Stellkraft in derjenigen Richtung auf das Umlenkmittel bzw. den Trommelantrieb wirkt, in der sich die gepufferte Kabellänge vergrößert. In besonders vorteilhafter Weise wird die Stellkraft hierbei durch eine Federkraft realisiert. Diese Ausführungsform führt naheliegend zu der Vergrößerung der gepufferten Kabellänge bei nachlassendem Zug am Kabel vor der Kabelspeichervorrichtung mit einer nachlassenden Stellkraft. Gleiches gilt im Falle der einsetzenden oder beschleunigten Rückführung des Kabels zur Kabelspeichervorrichtung. Im umgekehrten Fall führt ein einsetzender Zug am Kabel vor der Kabelspeichervorrichtung zu einer Verkürzung der gepufferten Kabellänge entgegen der Stellkraft. Gleiches gilt analog beim Aufwickeln des Kabels auf die Speichertrommel, wenn der Trommelantrieb eine zu große Geschwindigkeit aufweist in Bezug auf die Nachführung des Kabels zur Kabelspeichervorrichtung.

In vorteilhafter Ausführungsform ist hierbei die Stellkraft manuell oder elektromotorisch von der Regelungsvorrichtung gesteuert einstellbar. Sofern sich die Verhältnisse bei der Verwendung der Kabelspeichervorrichtung selten oder nur unwesentlich ändern, so ist eine manuelle Korrektur der Stellkraft hinreichend. Sofern jedoch die auftretenden Kräfte am Kabel und die gewünschte Bewegungsform des Kabels von größeren bzw. häufigen Schwankungen betroffen sind, so bietet sich der Einsatz eines elektromotorischen Stellmechanismus zur Veränderung der Stellkraft an. Die Veränderung der Stellkraft anstelle der Veränderung eines Mittelwertes bietet sich zum Erhalt der vorgesehenen Pufferung des Kabels zwischen dem Mittelwert und dem Minimum sowie zwischen dem Mittelwert und dem Maximum des Füllzustands besonders vorteilhaft an. Sofern nur der Mittelwert verstellt wird, so verkleinert sich in Richtung Minimum oder Maximum die vom Mittelwert ausgehende mögliche Pufferwirkung des Kabelpuffers. Sofern von der Messvorrichtung die Stellkraft erfasst wird, so bedarf eine Veränderung der Stellkraft sinnvoller Weise zugleich einer Anpassung des Mittelwertes.

Zur Lagerung des Umlenkmittels, insbesondere der Umlenkrolle, bietet sich in besonders vorteilhafter Weise der Einsatz eines schwenkbaren Pufferhebels an. Hierbei kann die Messvorrichtung die Winkelstellung des Pufferhebels ermitteln, wobei ausgehend von der Winkelstellung auf den Füllzustand des Kabelpuffers geschlossen werden kann. Zur Realisierung der Stellkraft ist es hierbei vorteilhaft, eine Drehfeder zur Belastung des Pufferhebels einzusetzen.

Zur Erzielung einer definierten Endlage ist es bei Einsatz eines Umlenkhebels weiterhin vorteilhaft, wenn der Pufferhebel und/oder das Umlenkmittel in der Endstellung mit minimaler gepufferter Kabellänge an einem Anschlag anschlagen.

Wenngleich es vielfältige Gestaltungsmöglichkeiten zur Führung des Kabels im Bereich des Kabelpuffers und zur Anordnung und Lagerung des Umlenkmittels gibt, so ist es dennoch besonders vorteilhaft, wenn das Umlenkmittel derart verstellbar gelagert ist, dass sich dieses beim Leeren des Kabelpuffers, d.h. bei Verkürzung der gepufferten Kabellänge, auf die Speichertrommel zu und beim Füllen des Kabelpuffers, d.h. bei einer Vergrößerung der gepufferten Kabellänge, von der Speichertrommel wegbewegt. Nicht erforderlich ist hierbei, dass sich das Umlenkmittel radial auf die Achse der Speichertrommel zu- bzw. davon weg bewegt, sondern vielmehr ist die Annäherung bzw. die Entfernung von der Speichertrommel in der Bewegungsform des Umlenkmittels vorteilhaft. Bei Verwendung einer schwenkbaren Lagerung des Umlenkmittels mittels eines Pufferhebels führt dieses in naheliegender Weise aufgrund der Kreisbewegung des Umlenkmittels zu einer sich verändernden Bewegungsrichtung in Annäherung an die Speichertrommel. Zumindest ist die Verwendung eines verstellbares Umlenkmittels mit einer Verstellbarkeit auf die Speichertrommel zu und davon weg hinsichtlich der Kabelführung vorteilhaft, da Umlenkungen und somit Biegungen des Kabels im Kabelpuffer einfacher und dennoch hinsichtlich der Pufferwirkung wirksam auf ein geringes Maß reduziert werden können.

Weiterhin ist es vorteilhaft, wenn das Umlenkmittel und die Kabeltrommel in Bezug auf das dazwischen verlaufende Kabel auf der gleichen Seite angeordnet sind. Bei einer vorteilhaften Verwendung einer Umlenkrolle bedeutet dies, dass sich die Umlenkrolle und die Speichertrommel gleichsinnig drehen.

Unter Berücksichtigung einer möglicherweise vorhandenen Steifigkeit im Kabel, d.h. einem zu berücksichtigenden Widerstand des Kabels gegen eine Biegung desselben, ist es vorteilhaft, wenn das Umlenkmittel derart positioniert ist, dass die Biegesteifigkeit eines aus der Kabelführung Richtung Umlenkmittel austretenden Kabels tendenziell eher zu einer Vergrößerung des Kabelpuffers beiträgt. Dies kann anhand der Lage einer Führungstangente in Bezug zum Umlenkmittel ermittelt werden. Die Führungstangente definiert sich hierbei als tangentiale Richtung des in einer Vorzugsrichtung - in der das Kabel ohne sonstige Einflüsse verlaufen würde - aus der Kabelführung austretenden Kabels. Naheliegender Weise bedarf es für eine derartige Ausführungsform einer Kabelführung, welche nicht lediglich ihrerseits eine Umlenkung darstellt, sondern eine Vorzugsrichtung austretend aus der Kabelführung in Richtung zum Kabelpuffer aufweist. Das Umlenkmittel ist hierbei derart zu positionieren, dass die Führungstangente bei einem mehrheitlich gefüllten Kabelpuffer am Umlenkmittel, d.h. bei einem Füllzustand zwischen Mittelwert und Maximum, tangential anliegt. Dieser Zustand führt dazu, dass bei einem beispielhaften Schieben am Kabel in Richtung der Kabelspeichervorrichtung das aus der Kabelführung in Richtung Umlenkmittel austretende Kabel aufgrund seiner Biegesteifigkeit zu der Vergrößerung der gepufferten Kabellänge beiträgt, ohne dass es einer übermäßig großen Stellkraft bedarf. Würde hingegen - in nicht vorteilhafter Weise - die Führungstangente derart ausgerichtet, dass sich diese bei einem Füllzustand zwischen Mittelwert und Minimum am Umlenkmittel anlegt, würde die Biegesteifigkeit des Kabels entgegen der Stellkraft im Extremfall zu einem Verharren des Umlenkmittels führen und somit die Wirkung des Kabelpuffers verhindern.

Weiterhin ist es vorteilhaft, wenn das Umlenkmittel derart angeordnet und verstellbar ist, dass der Umschlingungswinkel um das Umlenkmittel bei entleertem Kabelpuffer kleiner als 120° ist und entsprechend bei vollem Kabelpuffer größer als 120°. Hierbei ist es besonders vorteilhaft, wenn der Umschlingungswinkel bei entleertem Kabelpuffer, d.h. bei dem Minimum, kleiner als 90 ° ist und bei vollem Kabelpuffer, d.h. bei dem Maximum, größer als 150° ist.

Zur vorteilhaften Aufwicklung des Kabels auf die Speichertrommel wird in besonders vorteilhafter Weise eine derartige Führung des Kabels eingesetzt, dass die Windungen unmittelbar nebeneinander geordnet zum Liegen kommen. Hierzu wird in der besonders vorteilhaften Ausführungsform der Kabelspeichervorrichtung das Umlenkmittel eingesetzt, welches zur Führung des Kabels beim Aufwickeln parallel zur Achse der Speichertrommel verstellbar ist. Somit bedarf es keiner zusätzlichen Maßnahmen zur Lenkung des Kabels beim Aufwickeln auf die Speichertrommel.

Zur Gewährleistung der Verwendung der Kabelspeichervorrichtung insbesondere bei mobilen Fahrzeugen ohne erhöhte Anforderungen hinsichtlich des Platzbedarfs zu stellen ist es besonders vorteilhaft, wenn die durch den Kabelpuffer hervorgerufene Vergrößerung des erforderlichen Bauraums für die Kabelspeichervorrichtung im Gegensatz zur singulär betrachteten Speichertrommel - betrachtet in Richtung der Drehachse der Speichertrommel - beschränkt ist auf einen quadratischen Bauraum mit einer Kantenlänge, welche dem 1,5-fachen Durchmesser der Speichertrommel entspricht.

Hierbei ist es weiterhin besonders vorteilhaft, wenn der schwenkbare Pufferhebel mit dem Umlenkmittel aus einer Nutzstellung in eine Transportstellung verstellbar ist. Hierzu ist es beispielsweise möglich, eine Ein- bzw. Ausrastung zwischen Stellkraft und Pufferhebel vorzusehen. Somit kann der Pufferhebel - ohne dass im Kabel Kräfte vorliegen - in Richtung auf die Speichertrommel zu bewegt sein, so dass kein unnötiger Bauraum beim Transport der Kabelspeichervorrichtung erforderlich ist.

Die Verstellung des Umlenkmittels zwischen dem minimalen und dem maximalen Füllzustand des Kabelpuffers kann vielfältig erfolgen, wobei es in jedem Fall vorteilhaft ist, wenn die Führungstangente, welche die Vorzugsrichtung der Kabelführung definiert, und eine Verbindungslinie durch das am Umlenkmittel und der Speichertrommel aufliegende Kabel einen Winkel zwischen 60° und 120° einnimmt. Hierdurch werden unnötige Verformungen des Kabels im Kabelpuffer vermieden und weiterhin kann bei einer Veränderung der Zugkräfte im Kabel wirksam eine Verstellung des Umlenkmittels erfolgen.

Weiterhin ist es insbesondere unter Berücksichtigung einer möglichen Eigensteifigkeit des Kabels vorteilhaft, wenn die Schwenkachse des Pufferhebels zur Lagerung des Umlenkmittels derart angeordnet ist, dass bei einem minimalen Füllzustand des Kabelpuffers, d.h. bei kleinster gepufferter Kabellänge, eine durch die Schwenkachse des Pufferhebels verlaufende Tangente am Umlenkmittel ungefähr rechtwinklig auf der vom Kabelpuffer definierten Führungstangente angeordnet ist. Abweichungen im Bereich zwischen ±15° sind hierbei unerheblich. Im gleichen Maß ist es vorteilhaft, wenn die Schwenkachse derart angeordnet ist, dass bei maximalem Füllzustand des Kabelpuffers, d.h. bei größter gepufferter Kabellänge, die Tangente ungefähr parallel zur Führungstangente ausgerichtet ist. Ebenso gilt hier eine Abweichung von ±15° als unerheblich.

In den nachfolgenden Figuren wird eine beispielhafte Ausführungsform für eine erfindungsgemäße Kabelspeichervorrichtung skizziert.

Es zeigen:
- Fig. 1: die beispielhafte Kabelspeichervorrichtung in perspektivischer Ansicht;
- Fig. 2: schematisch die Ausführung des Kabelpuffers der Kabelspeichervorrichtung in einer mittleren Stellung;
- Fig. 3: analog der Fig. 2 die Anordnung des Kabelpuffers der Kabelspeichervorrichtung bei einer Leerung des Kabelpuffers;
- Fig. 4: analog der Fig. 2 die Darstellung des Kabelpuffers bei einem mehrheitlich gefülltem Kabelpuffer.

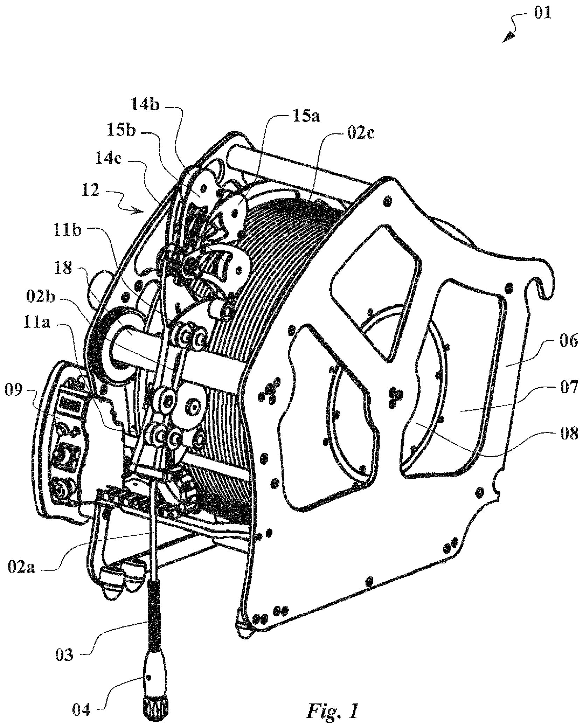

In der **Fig. 1** ist eine perspektivische Ansicht einer beispielhaften Ausführungsform einer erfindungsgemäßen Kabelspeichervorrichtung 01 dargestellt. Zu erkennen ist zunächst einmal ein tragendes Gestell 06, an dem die weiteren Elemente gelagert sind. Hierzu zählt insbesondere mittig der Trommelantrieb 08, auf dem wiederum vom Trommelantrieb 08 in zwei Drehrichtungen antreibbar die Speichertrommel 07 gelagert ist, auf der sich das Kabel 02c mit einer Mehrzahl von Windungen befindet. Am fernen Ende 03 des frei hängenden Kabels 02a außerhalb der Kabelspeichervorrichtung 01 befindet sich in dieser exemplarischen Ausführungsform eine Inspektionskamera 04. Das Kabel 02 durchläuft zunächst einmal eine erste Kabelführung 11a sowie eine zweite Kabelführung 11b. Somit wird zunächst einmal ein zuverlässiger und fehlerfreier Einlauf in die Kabelspeichervorrichtung ermöglicht. Die Steuerung des Trommelantriebs 08 zum Aufwickeln bzw. Abwickeln des Kabels 02 von der Speichertrommel 07 erfolgt anhand der vorhandenen Regelungsvorrichtung 09.

Erfindungsgemäß wird zwischen der Speichertrommel 07 und der Kabelführung 11 ein Kabelpuffer 12 eingesetzt, welcher mittels eines schwenkbaren Pufferhebels 15 mit einer daran angeordneten Umlenkrolle 14, über die das gepufferte Kabel 13 geführt wird, realisiert wird. Weiterhin ist in diesem Ausführungsbeispiel vorgesehen, dass die Kabelführung 11 mit dem Pufferhebel 15 nebst Umlenkrolle 14 entlang der Richtung der Drehachse der Speichertrommel 07 verstellbar ist, wobei hierzu die Spurstellvorrichtung 18 eingesetzt wird. Hiermit wird eine kompakte und geordnete Wicklung auf der Speichertrommel 07 ermöglicht.

Weiterhin ist zu erkennen, dass in dieser Ansicht die verschiedenen Stellungen für den Pufferhebel 15 nebst Umlenkrolle 14 dargestellt sind, wobei in einer mittleren Stellung 15a die Umlenkung 14a des gepufferten Kabels 13 über die Umlenkrolle zu einem Zustand führt, bei der der Speicherantrieb 08 konstant bei konstanter Bewegung des sich vor der Kabelführung befindenden Kabels 02a betrieben werden kann. D.h. in diesem Fall befindet sich der Füllzustand innerhalb der Regeltoleranz um den vordefinierten Mittelwert. Im einfachsten Fall handelt es sich hierbei um den Stillstand.

Kommt es nunmehr jedoch zu einem Ungleichgewicht zwischen dem Zug am Kabel 02a vor der Kabelspeichervorrichtung und der Abwicklung des Kabels 02c von der Speichertrommel 07 führt dies zu einer Annäherung der Umlenkrolle an die Speichertrommel. Dies wird von der Regelungsvorrichtung 09 mittels einer Messvorrichtung erkannt, wobei in Folge die Regelungsvorrichtung 09 automatisch den Trommelantrieb 08 in Abrollrichtung beschleunigt. Das heißt, dass die Drehgeschwindigkeit der Speichertrommel 07 beim Abwickeln fortlaufend bis zur Rückkehr an den Mittelwert erhöht bzw. beim Aufwickeln fortlaufend bis zur Rückkehr an den Mittelwert verringert wird. Im umgekehrten Fall, wenn am austretenden Kabel 02a ein geringerer Zug vorherrscht als dies einem Abwickeln des aufgewickelten Kabels 02c von der Speichertrommel 07 entspricht, führt dies zu einer Entfernung der Umlenkrolle 14b von der Speichertrommel 07. Dies wird ebenso mittels der Regelungsvorrichtung erkannt, so dass gegensteuernd bei einem Abwickelvorgang der Trommelantrieb 08 abgebremst wird, während hingegen bei einem Aufwickelvorgang die Drehgeschwindigkeit der Speichertrommel 07 erhöht wird.

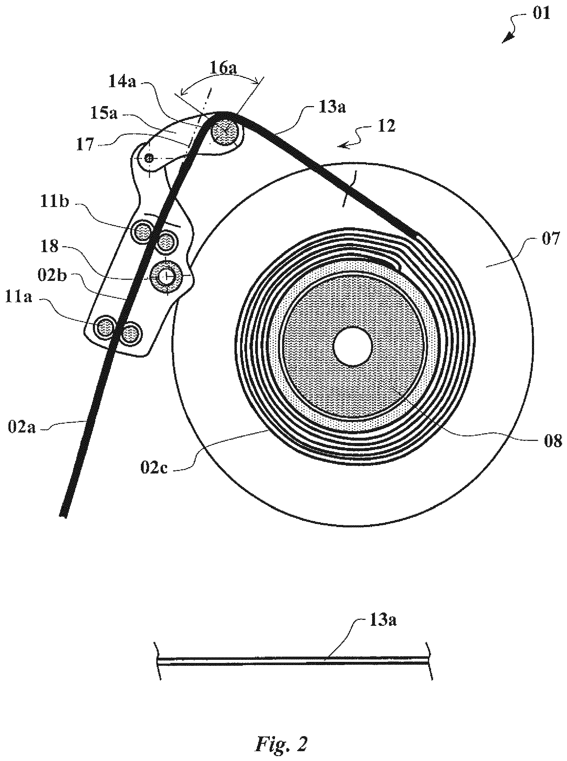

Die drei exemplarisch skizzierten Zuständen des Umlenkmittels in Form der Umlenkrolle 14 zeigen schematisch die Figuren 2 bis 4, wobei die **Fig. 2** den Zustand eines Gleichgewichts darstellt, bei dem sich die Geschwindigkeit des aus der Kabelführung 11 austretenden Kabels 2a übereinstimmend mit der Abwickelbewegung des Kabels 02c von der Speichertrommel 07 bewegt. In diesem Zustand entsprechend dem Mittelwert mit entsprechender Position des Umlenkmittels 14a wird von der Regelungsvorrichtung der vorliegende Zustand hinsichtlich des Trommelantriebs beibehalten. Exemplarisch zum weiteren Vergleich dargestellt ist die in dem Kabelpuffer 12 vorhandene gepufferte Kabellänge 13a.

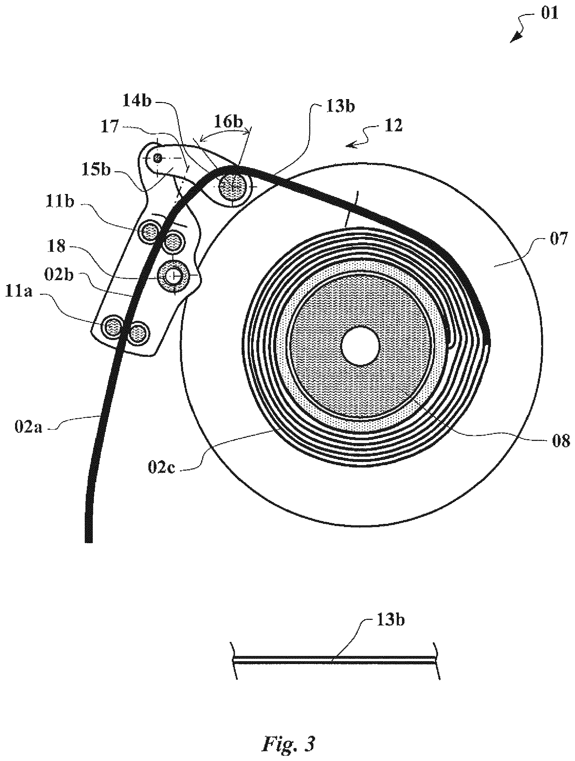

Hierzu im Vergleich skizziert die **Fig. 3** den Zustand, bei dem am austretenden Kabel 2a ein stärkerer Zug vorliegt als dies der Abwickelbewegung der Speichertrommel 07 entspricht, woraufhin die wirkenden Kräfte im Kabel innerhalb des Kabelpuffers 12 zu einer Annäherung der Umlenkrolle 14b an die Speichertrommel 07 führt. Im Vergleich zur Fig. 2 ist die verkürzte gepufferte Kabellänge 13b skizziert.

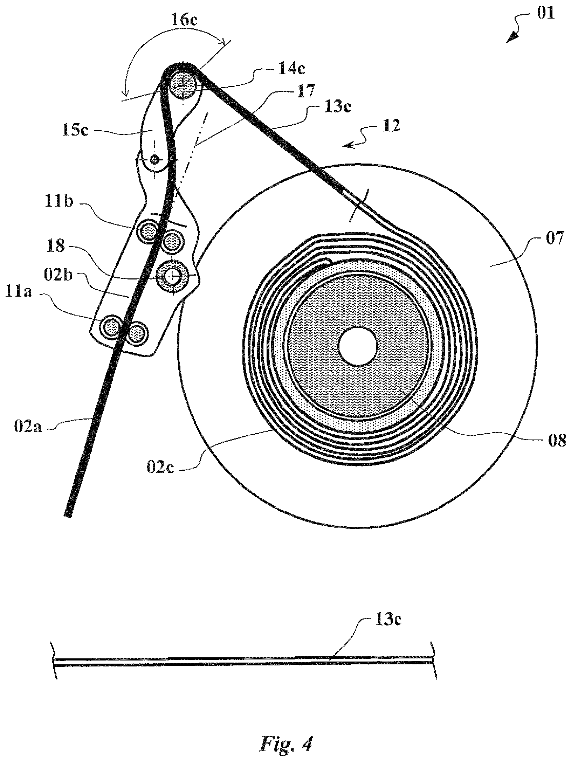

In der **Fig. 4** wird der entgegengesetzte Zustand skizziert, bei dem am austretenden Kabel 02a ein geringerer Zug vorhanden ist als es der Abwickelbewegung des aufgewickelten Kabels 02c von der Speichertrommel 07 entspricht. Hierdurch erfolgt eine Rückverlagerung der Umlenkrolle 14c in Abkehrung von der Speichertrommel 07, wodurch sich die gepufferte Kabellänge 13c entsprechend vergrößert.

Weiterhin ist in den Figuren 2 bis 4 die Führungstangente 17 skizziert, welche sich ergibt anhand der Vorzugsrichtung der Kabelführung 11. Hierzu weist die Kabelführung 11 ein erstes Rollenpaar 11 a und ein zweites Rollenpaar 11b auf. Die Ausrichtung der Kabelführung 11 und Anordnung und Lagerung der Umlenkrolle 14 ist derart gewählt, dass die Führungstangente 17 erst im Bereich eines mehrheitlich gefüllten Kabelpuffers an der Umlenkrolle 14 tangential zur Anlage kommt. Hierdurch wird erreicht, dass die Biegesteifigkeit des Kabels 02 nicht nennenswert der auf den Pufferhebel 15 wirkenden Stellkraft entgegen wirkt.

Weiterhin ist den Figuren 2 bis 4 der veränderliche Umschlingungswinkel 16 zu erkennen, wobei dieser ausgehend vom Minimum für den Füllzustand circa 60°, beim Mittelwert circa 90° und beim Maximum circa 120° beträgt.

## Patentansprüche

1. Kabelspeichervorrichtung (01) zur Aufnahme und Abgabe eines als Datenkabel ausgebildeten Kabels (02), an dessen Ende eine Inspektionskamera (04) angeordnet ist, wobei über das Kabel (02) Signale von und zu der Inspektionskamera (04) übertragbar sind, mit einer drehbar gelagerten Speichertrommel (07), auf der das Kabel (02) aufgewickelt werden kann, mit einem Trommelantrieb (08), welcher die Speichertrommel (07) in Abroll- und Aufrollrichtung antreiben kann, mit einer Steuerungs- oder Regelungsvorrichtung (09) zur Steuerung des Trommelantriebs (08), mit einer Kabelführung (11) und mit einem zwischen Kabelführung (11) und Speichertrommel (07) angeordnetem Kabelpuffer (12), welcher eine variable gepufferte Kabellänge (13) aufnehmen kann,
**dadurch gekennzeichnet,**
**dass** eine mit der Regelungsvorrichtung (09) verbundene Messvorrichtung den Füllzustand des Kabelpuffers (12) bestimmen kann, wobei die Regelungsvorrichtung (09) selbsttätig den Trommelantrieb (08) in Abhängigkeit vom Füllzustand in Abroll- und Aufrollrichtung ansteuern kann, wobei die Endgeschwindigkeit des von der Speichertrommel (07) fernen Endes (03) des Kabels (02) mit einem Geschwindigkeitsmesser der Inspektionskamera ermittelt werden kann, und wobei die Endgeschwindigkeit der Regelungsvorrichtung (09) zur Regelung des Trommelantriebs (08) übermittelt werden kann.

2. Kabelspeichervorrichtung (01) nach Anspruch 1,
**dadurch gekennzeichnet,**
**dass** der Füllzustand zwischen einem Minimum und einem Maximum mehrere vorbestimmte Werte oder einen beliebigen Wert annehmen kann, wobei die Speichertrommel (07) in Abhängigkeit vom Füllzustand mit unterschiedlichen Geschwindigkeiten betrieben werden kann.

3. Kabelspeichervorrichtung (01) nach Anspruch 1 oder 2,
**dadurch gekennzeichnet,**
**dass** in der Regelvorrichtung (09) ein fester oder einstellbarer Mittelwert mit einer Regeltoleranz für den Füllzustand hinterlegt ist, wobei die Regelvorrichtung (09) bei Unterschreiten oder Überschreiten der Regeltoleranz eine Beschleunigung der Speichertrommel (07) in Abrollrichtung respektiv in Aufrollrichtung bewirken kann.

4. Kabelspeichervorrichtung (01) nach Anspruch 3,
**dadurch gekennzeichnet,**
**dass** die Beschleunigung abhängig von der Differenz zwischen Füllzustand und Mittelwert ist.

5. Kabelspeichervorrichtung (01) nach einem der Ansprüche 1 bis 4,
**dadurch gekennzeichnet,**
**dass** der Trommelantrieb mit der Speichertrommel verschiebbar oder schwenkbar gelagert ist, wobei die Messvorrichtung den Füllzustand des Kabelpuffers durch die Messung der Position des Trommelantriebs mit Speichertrommel ermitteln kann.

6. Kabelspeichervorrichtung (01) nach einem der Ansprüche 1 bis 4,
**dadurch gekennzeichnet,**
**dass** zumindest ein verstellbares Umlenkmittel (14), insbesondere eine Umlenkrolle (14), innerhalb des Kabelpuffers (12) angeordnet ist, wobei die Messvorrichtung den Füllzustand des Kabelpuffers (12) durch die Messung der Position des Umlenkmittels (14) ermitteln kann.

7. Kabelspeichervorrichtung (01) nach Anspruch 5 oder 6,
**dadurch gekennzeichnet,**
**dass** eine Stellkraft, insbesondere eine Federkraft, in derjenigen Richtung auf das Umlenkmittel (14) oder den Trommelantrieb wirkt, in der sich die gepufferte Kabellänge (13) vergrößert.

8. Kabelspeichervorrichtung (01) nach Anspruch 7,
**dadurch gekennzeichnet,**
**dass** die Stellkraft manuell oder elektromotorisch von der Regelungsvorrichtung (09) gesteuert einstellbar ist.

9. Kabelspeichervorrichtung (01) nach einem der Ansprüche 6 bis 8,
**dadurch gekennzeichnet,**
**dass** das Umlenkmittel (14) an einem schwenkbaren Pufferhebel (15) gelagert ist, wobei die Messvorrichtung die Winkelstellung des Pufferhebels (15) ermitteln kann, wobei insbesondere die Stellkraft von einer Drehfeder erzeugt wird.

10. Kabelspeichervorrichtung (01) nach einem der Ansprüche 6 bis 9,
**dadurch gekennzeichnet,**
**dass** das Umlenkmittel (14) derart verstellbar, insbesondere schwenkbar, gelagert ist, dass sich das Umlenkmittel (14) beim Leeren des Kabelpuffers (12) auf die Speichertrommel (07) zu und beim Füllen des Kabelpuffers (12) von der Speichertrommel (07) weg bewegt.

11. Kabelspeichervorrichtung (01) nach einem der Ansprüche 6 bis 10,
**dadurch gekennzeichnet,**
**dass** sich das Umlenkmittel (14) und die Kabeltrommel (07) in Bezug auf das dazwischen verlaufende Kabel (02) auf gleicher Seite befinden, insbesondere dass sich die Umlenkrolle (14) und die Speichertrommel (07) gleichsinnig drehen.

12. Kabelspeichervorrichtung (01) nach einem der Ansprüche 6 bis 11,
**dadurch gekennzeichnet,**
**dass** die Kabelführung (11) auf der zum Umlenkmittel (14) weisenden Seite eine Führungstangente (17) in Vorzugsrichtung aufweist und das Umlenkmittel (14) derart positioniert ist, dass die Führungstangente (17) bei einem mehrheitlich gefüllten Kabelpuffer (12) am Umlenkmittel (14) tangential anliegt.

13. Kabelspeichervorrichtung (01) nach einem der Ansprüche 6 bis 12,
**dadurch gekennzeichnet,**
**dass** der Umschlingungswinkel (16) um das Umlenkmittel (14) bei entleertem Kabelpuffer (12) kleiner als 120°, insbesondere kleiner als 90°, und bei vollem Kabelpuffer (12) größer als 120°, insbesondere größer als 150°, ist.

14. Kabelspeichervorrichtung (01) nach einem der Ansprüche 6 bis 13,
**dadurch gekennzeichnet,**
**dass** die Kabelführung (11) zusammen mit dem Umlenkmittel (14) parallel zur Achse der Speichertrommel (07) beim Auf- und/oder Abwickeln des Kabels (02) verstellbar ist.

## Claims

1. A cable storage device (01) for receiving and dispensing a cable (02) realized as a data cable, at whose end an inspection camera (04) is arranged, signals being able to be transmitted from and to the inspection camera (04) via the cable (02), said cable storage device (01) comprising:
a storage reel (07) mounted in a rotatable manner, on which the cable (02) can be wound; a reel drive (08), which can drive the storage reel (07) in an unwinding and winding direction; a controlling or regulating device (09) for controlling the reel drive (08); a cable guide (11); and a cable buffer (12) arranged between the cable guide (11) and the storage reel (07), said cable buffer (12) being able to receive a variable buffered cable length (13), **characterized in that**
a measuring device connected to the regulating device (09) can determine the filling level of the cable buffer (12), said regulating device (09) being able to automatically control the reel drive (08) in the unwinding and winding direction in dependence of the filling level, the final speed of the end (03) of the cable (02) being far from the storage reel (07) being able to be identified using a speedometer of the inspection camera, and said final speed being able to be transmitted to the regulating device (09) for regulating the reel drive (08).

2. The cable storage device (01) according to claim 1,
**characterized in that**
the filling level is able to assume several predetermined values or any value between a minimum and a maximum, said storage reel (07) being able to be operated with different speeds in dependence of the filling level.

3. The cable storage device (01) according to claim 1 or 2,
**characterized in that**
a preset or adjustable mean value having a regulation tolerance for the filling level is stored in the regulating device (09), said regulating device (09) being able to cause the storage reel (07) to accelerate in the unwinding or winding direction, respectively, when the regulation tolerance is fallen below or exceeded.

4. The cable storage device (01) according to claim 3,
**characterized in that**
the acceleration depends on the difference between the filling level and the mean value.

5. The cable storage device (01) according to any one of the claims 1 to 4,
**characterized in that**
the reel drive having the storage reel is movably or pivotably mounted, the measuring device being able to identify the filling level of the cable buffer by measuring the position of the reel drive having the storage reel.

6. The cable storage device (01) according to any one of the claims 1 to 4,
**characterized in that**
at least one adjustable deflection means (14), in particular a deflection pulley (14), is arranged within the cable buffer (12), the measuring means being able to identify the filling level of the cable buffer (12) by measuring the position of the deflection means (14).

7. The cable storage device (01) according to claim 5 or 6,
**characterized in that**
an actuating force, in particular a spring force, acts on the deflection means (14) or the reel drive in the direction in which the buffered cable length (13) is increased.

8. The cable storage device (01) according to claim 7,
**characterized in that**
the actuating force can be set in a manual or electromotive manner under the control of the regulating device (09).

9. The cable storage device (01) according to any one of the claims 6 to 8,
**characterized in that**
the deflection means (14) is mounted at a pivotable buffer lever (15), the measuring device being able to identify the angular position of the buffer lever (15), the actuating force in particular being generated by a torsion spring.

10. The cable storage device (01) according to any one of the claims 6 to 9,
**characterized in that**
the deflection means (14) is mounted adjustably, in particular pivotably, in such a manner that the deflection means (14) moves towards the storage reel (07) when the cable buffer (12) is being emptied and moves away from the storage reel (07) when the cable buffer (12) is being filled.

11. The cable storage device (01) according to any one of the claims 6 to 10,
**characterized in that**
the deflection means (14) and the cable reel (07) are arranged on the same side with regard to the cable (02) running in between, in particular that the deflection pulley (14) and the storage reel (07) rotate in the same direction.

12. The cable storage device (01) according to any one of the claims 6 to 11,
**characterized in that**
the cable guide (11) comprises a guiding tangent (17) on the side pointing towards the deflection means (14) in the preferred direction and the deflection means (14) is positioned in such a manner that the guiding tangent (17) rests tangentially upon the deflection means (14) when the cable buffer (12) is mostly filled.

13. The cable storage device (01) according to any one of the claims 6 to 12,
**characterized in that**
the wrap angle (16) around the deflection means (14) is lesser than 120°, in particular lesser than 90°, when the cable buffer (12) is empty, and that the wrap angle (16) is greater than 120°, in particular greater than 150°, when the cable buffer (12) is full.

14. The cable storage device (01) according to any one of the claims 6 to 13,
**characterized in that**
the cable guide (11) can be adjusted parallel to the axis of the storage reel (07) in conjunction with the deflection means (14) when winding and/or unwinding the cable (02).

## Revendications

1. Dispositif pour stocker un câble (01) pour accueillir et dégager un câble (02) formé en tant que câble de données, une caméra d'inspection (04) étant disposée à une extrémité dudit câble, des signaux pouvant être transmis de et à la caméra d'inspection (04) par le câble (02), ledit dispositif pour stocker un câble comprenant :
un enrouleur de stockage (07) monté de manière rotative, sur lequel le câble (02) peut être enroulé, un entraînement d'enrouleur (08), qui peut entraîner l'enrouleur de stockage (07) dans une direction de déroulement et d'enroulement, un dispositif de contrôle ou de régulation (09) pour contrôler l'entraînement d'enrouleur (08), un guide de câble (11), et un tampon de câble (12) disposé entre le guide de câble (11) et l'enrouleur de stockage (07), ledit tampon de câble (12) pouvant accueillir une longueur de câble (13) tamponnée variable,
**caractérisé en ce qu'**
un dispositif de mesure relié au dispositif de régulation (09) peut déterminer le niveau de remplissage du tampon de câble (12), ledit dispositif de régulation (09) pouvant contrôler automatiquement l'entraînement d'enrouleur (08) dans la direction de déroulement et d'enroulement en fonction du niveau de remplissage, la vitesse finale de l'extrémité (03) du câble (02) le plus loin de l'enrouleur de stockage (07) pouvant être identifiée au moyen d'un compteur de vitesse de la caméra d'inspection, et ladite vitesse finale pouvant être transmise au dispositif de régulation (09) pour réguler l'entraînement d'enrouleur (08).

2. Dispositif pour stocker un câble (01) selon la revendication 1,
**caractérisé en ce que**
le niveau de remplissage peut adopter plusieurs valeurs prédéterminées ou n'importe quelle valeur entre un minimum et un maximum, l'enrouleur de stockage (07) pouvant être opéré avec des vitesses différentes en fonction du niveau de remplissage.

3. Dispositif pour stocker un câble (01) selon la revendication 1 ou 2,
**caractérisé en ce qu'**
une valeur moyenne préréglée ou réglable ayant une tolérance de régulation pour le niveau de remplissage est stockée dans le dispositif de régulation (09), ledit dispositif de régulation (09) pouvant provoquer une accélération de l'enrouleur de stockage (07) dans la direction de déroulement ou d'enroulement, respectivement, quand la tolérance de régulation n'est pas atteinte ou est excédée.

4. Dispositif pour stocker un câble (01) selon la revendication 3,
**caractérisé en ce que**
l'accélération dépend de la différence entre le niveau de remplissage et la valeur moyenne.

5. Dispositif pour stocker un câble (01) selon l'une quelconque des revendications 1 à 4,
**caractérisé en ce que**
l'entraînement d'enrouleur ayant l'enrouleur de stockage est monté de manière déplaçable ou pivotante, le dispositif de mesure pouvant identifier le niveau de remplissage du tampon de câble en mesurant la position de l'entraînement d'enrouleur ayant l'enrouleur de stockage.

6. Dispositif pour stocker un câble (01) selon l'une quelconque des revendications 1 à 4,
**caractérisé en ce qu'**
au moins un moyen de renvoi (14) ajustable, en particulier une poulie de renvoi (14), est disposé dans le tampon de câble (12), le dispositif de mesure pouvant identifier le niveau de remplissage du tampon de câble (12) en mesurant la position du moyen de renvoi (14).

7. Dispositif pour stocker un câble (01) selon la revendication 5 ou 6,
**caractérisé en ce qu'**
une force de commande, en particulier une force élastique, agit sur le moyen de renvoi (14) ou l'entraînement d'enrouleur dans la direction dans laquelle la longueur de câble (13) tamponnée est agrandie.

8. Dispositif pour stocker un câble (01) selon la revendication 7,
**caractérisé en ce que**
la force de commande peut être ajustée de manière manuelle ou électromotrice sous la commande du dispositif de régulation (09).

9. Dispositif pour stocker un câble (01) selon l'une quelconque des revendications 6 à 8,
**caractérisé en ce que**
le moyen de renvoi (14) est monté à un levier de tampon (15) pivotable, le dispositif de mesure pouvant identifier la position angulaire du levier de tampon (15), la force de commande en particulier étant générée par un ressort de torsion.

10. Dispositif pour stocker un câble (01) selon l'une quelconque des revendications 6 à 9,
**caractérisé en ce que**
le moyen de renvoi (14) est monté de manière ajustable, en particulier de manière pivotable, de telle manière que le moyen de renvoi (14) se dirige vers l'enrouleur de stockage (07) quand le tampon de câble (12) est vidé et s'éloigne de l'enrouleur de stockage (07) quand le tampon de câble (12) est rempli.

11. Dispositif pour stocker un câble (01) selon l'une quelconque des revendications 6 à 10,
**caractérisé en ce que**
le moyen de renvoi (14) et l'enrouleur de câble (07) sont disposés sur le même côté concernant le câble (02) qui passe entre eux, en particulier que la poulie de renvoi (14) et l'enrouleur de stockage (07) tournent dans le même sens.

12. Dispositif pour stocker un câble (01) selon l'une quelconque des revendications 6 à 11,
**caractérisé en ce que**
le guide de câble (11) comprend une tangente de guide (17) sur le côté tourné vers le moyen de renvoi (14) dans la direction préférée et le moyen de renvoi (14) est positionné de telle manière que la tangente de guide (17) repose tangentiellement sur le moyen de renvoi (14) quand le tampon de câble (12) est rempli presque complètement.

13. Dispositif pour stocker un câble (01) selon l'une quelconque des revendications 6 à 12,
**caractérisé en ce que**
l'angle d'enroulement (16) autour du moyen de renvoi (14) est inférieur à 120°, en particulier inférieur à 90°, quand le tampon de câble (12) est vide, et que l'angle d'enroulement (16) est supérieur à 120°, en particulier supérieur à 150°, quand le tampon de câble (12) est rempli.

14. Dispositif pour stocker un câble (01) selon l'une quelconque des revendications 6 à 13,
**caractérisé en ce que**
le guide de câble (11) peut être ajusté parallèlement à l'axe de l'enrouleur de stockage (07) en coopération avec le moyen de renvoi (14) quand le câble (02) est enroulé et/ou déroulé.
